# EUROPÄISCHE PATENTSCHRIFT

(11) **EP 2 808 855 B1**
(45) Veröffentlichungstag und Bekanntmachung des Hinweises auf die Patenterteilung: **08.03.2017**
(21) Anmeldenummer: 14001308.7
(22) Anmeldetag: 10.04.2014
(51) Int. Cl.: G08G 1/16, G06Q 10/00, G06Q 10/06

(54) **Verfahren und Kommunikationssystem zur Verkürzung des Überholzeitraums zwischen Nutzfahrzeugen**
Method and communication system for shortening the overtaking period between commercial vehicles
Procédé et système de communication destiné à raccourcir le temps d'indisponibilité entre des véhicules utilitaires

(30) Priorität: 15.05.2013 DE 102013008262
(43) Veröffentlichungstag der Anmeldung: 03.12.2014
(73) Patentinhaber: MAN Truck & Bus AG, 80995 München (DE)
(72) Erfinder: Römersperger, Xaver, 81543 München (DE); Dörner, Karlheinz, 85757 Karlsfeld (DE); Schwerberger, Walter, 82278 Althegnenberg (DE); Völl, Sebastian, 85221 Dachau (DE); Kraus, Sven, 85748 Garching (DE); Echtler, Johannes, 80686 München (DE); Bröcheler, Kirsten, 81371 München (DE)
(74) Vertreter: Liebl, Thomas

(56) Entgegenhaltungen:
- EP-A1- 2 264 683
- WO-A2-2008/008404
- US-A1- 2002 084 917
- US-A1- 2013 151 412

## Beschreibung

Die Erfindung betrifft ein Verfahren zur Verkürzung des für einen Überholvorgang benötigten Überholzeitraums zwischen einem vorrausfahrenden ersten Nutzfahrzeug und einem nachfolgenden zweiten Nutzfahrzeug gemäß dem Oberbegriff des Patentanspruchs 1, ein Kommunikationssystem für Nutzfahrzeuge zur Verkürzung des Überholzeitraums gemäß dem Oberbegriff des Patentanspruches 6 sowie ein Nutzfahrzeug mit dem Kommunikationssystem zur Durchführung des Verfahrens nach Patentanspruch 10.

Überholmanöver zwischen schweren Nutzfahrzeugen auf Autobahnen oder mehrspurig ausgebauten Straßen erfordern oftmals einen langen Überholzeitraum, wenn die Differenzgeschwindigkeit zwischen den beiden beteiligten Nutzfahrzeugen entsprechend gering ist. Die dadurch sich ergebenden langwierigen Überholvorgänge behindern den nachfolgenden Verkehr oftmals sehr beträchtlich.

Langwierige Überholvorgänge könnten verkürzt werden, wenn während des Überholvorganges größere Differenzgeschwindigkeiten bei den beteiligten Fahrzeugen erreicht werden könnten.

Aus der WO 2008/008404 A2 ist ein Verfahren bekannt, bei dem zur Verringerung der Überholzeit ein Fahrer eines hinteren Fahrzeugs mit einem Fahrer eines zu überholenden, vorderen Fahrzeugs kommuniziert. Dem Fahrer des vorderen Fahrzeugs wird dabei mittels eines Bildschirms die Frage angezeigt, ob er die Fahrzeuggeschwindigkeit reduzieren will, um sich von dem hinteren Fahrzeug überholen zu lassen. Zudem wird dem Fahrer des vorderen Fahrzeugs auch der Zeitverlust durch die Reduzierung der Fahrzeuggeschwindigkeit während des Überholvorgangs angezeigt. Der Fahrer des vorderen Fahrzeugs kann sich dann entscheiden, ob er die Fahrzeuggeschwindigkeit verringern will oder nicht.

Der Erfindung liegt die Aufgabe zugrunde, ein Verfahren anzugeben, mit dem eine Verkürzung des bei einem Überholvorgang notwendigen Überholzeitraums erreicht werden kann.

Die Lösung dieser Aufgabe erhält man mit den im Patentanspruch 1 angegebenen Merkmalen. Besonders vorteilhafte Weiterbildungen des erfindungsgemäßen Verfahrens sind in den Unteransprüchen 2 bis 5 offenbart.

Gemäß Patentanspruch 1 wird ein Verfahren zur Verkürzung des für einen Überholvorgang benötigten Überholzeitraums zwischen einem vorausfahrenden ersten Nutzfahrzeug und einem nachfolgenden zweiten Nutzfahrzeug, vorgeschlagen, wobei in dem ersten, zu überholenden Nutzfahrzeug angezeigt wird, dass mit dem nachfolgenden, zweiten Nutzfahrzeug ein Überholvorgang durchgeführt wird, und wobei in jedem Nutzfahrzeug eine Sende-Empfangseinrichtung installiert ist, mittels denen im Zusammenhang mit dem beabsichtigten und/oder durchgeführten Überholvorgang Überholvorgangsdaten übermittelt werden. Erfindungsgemäß erfolgt anhand der Überholvorgangsdaten nach Beendigung des Überholvorganges eine Bewertung des Überholvorganges. Für einen Überholvorgang, bei dem das erste Nutzfahrzeug überholt wurde, erfolgt dabei eine positive Bewertung, wenn das überholte erste Nutzfahrzeug seine Fahrgeschwindigkeit während des Überholvorganges reduziert hat.

Nach der Anzeige der Überholabsicht kann das vorausfahrende Nutzfahrzeug mittels einer Sende-Empfangseinrichtung ein Bestätigungssignal an das nachfolgende Nutzfahrzeug übermitteln, so dass der Fahrer des nachfolgenden Nutzfahrzeugs eine Kooperationsbereitschaft erkennen kann, die beispielsweise darin bestehen kann, dass der vorausfahrende Fahrer sich bereiterklärt, eine geringfügige Geschwindigkeitsreduzierung während des Überholvorgangs vorzunehmen. Im Zusammenhang mit dem Datenaustausch zwischen den beiden beteiligten Nutzfahrzeugen kann auch ein Entlohnungsangebot für den Fahrer des zu überholenden Nutzfahrzeugs unterbreitet werden. Ein solches Entlohnungsangebot kann ein Geldbetrag oder eine andere Vergütung, wie beispielsweise Bonuspunkte, beinhalten, damit ein Anreiz für eine Kooperation beim Überholvorgang gegeben ist. Nach Beendigung des Überholvorganges erfolgt eine Bewertung dahingehend, ob eine in Aussicht gestellte Kooperation tatsächlich stattgefunden hat und somit die angebotene Entlohnung auch tatsächlich gerechtfertigt ist. Eine solche Bewertung kann beispielsweise dadurch erfolgen, dass eine erfolgte Geschwindigkeitsreduzierung beim überholten Nutzfahrzeug in Form eines entsprechenden Datensignals an das überholenden Nutzfahrzeug oder an ein zentrales Rechensystem übertragen und dort als Kooperationskriterium erkannt wird.

Grundsätzlich kann in einem auf ein vorausfahrendes Nutzfahrzeug allmählich auffahrenden nachfolgenden Nutzfahrzeug bei Erreichen eines vorgegebenen Mindestabstands die Sende-Empfangseinrichtung freigeschaltet oder aktiviert werden, um einen beabsichtigten Überholvorgang anzukündigen. Zum Anzeigen einer Überholabsicht können auch andere Fahrzeugsignale ausgewertet werden, aus denen auf eine Überholabsicht geschlossen werden kann (zum Beispiel Blinkerbetätigung). Die Absendung eines entsprechenden Datensignals, mit dem dem vorausfahrenden Fahrer ein beabsichtigter Überholvorgang angekündigt wird, kann aber auch mittels einer Tastatur- oder Spracheingabe oder einer anderen Eingabeeinheit im nachfolgenden Nutzfahrzeug ausgelöst werden.

Besonders vorteilhaft ist es, wenn bei der Bewertung eines durchgeführten Überholvorganges eine Kosten-Nutzen-Ermittlung für das erste und/oder zweite Nutzfahrzeug erfolgt. Eine solche Kosten-Nutzen-Ermittlung kann anhand von fahrdynamischen Kenndaten in beiden beteiligten Nutzfahrzeugen durchgeführt werden, wobei beispielsweise der Zeitgewinn beim überholenden Nutzfahrzeug und der Zeitverlust beim überholten Nutzfahrzeug, welches seine Fahrgeschwindigkeit während des Überholvorgangs reduziert hat, bewertet werden. Grundsätzlich besteht aber auch die Möglichkeit, für einen kooperativ durchgeführten Überholvorgang einen festen Vergütungssatz für das überholte Nutzfahrzeug vorzusehen. Die jeweils ermittelte oder festgesetzte Vergütung kann in entsprechenden Datenspeichern der Sende-Empfangseinrichtungen beider Nutzfahrzeuge abgespeichert werden. Es besteht aber auch die Möglichkeit, dass die Nutzfahrzeuge mit einem zentralen Rechenzentrum eines Funknetzes in Verbindung stehen und dort sämtliche Überholvorgangsdaten und Vergütungsinformationen ausgewertet und/oder abgespeichert werden können

Ein Algorithmus auf einem Steuergerät im Fahrzeug kann gemäß einer vorteilhaften Weiterbildung des Verfahrens feststellen, ob eine empfangene Nachricht auf das eigene Fahrzeug bezogen ist. Dies kann beispielsweise durch einen Abgleich der Position des Senders, übermittelt als Teil der Nachricht, mit der eigenen Fahrzeugposition aus einem GNSS (Global Navigation Satellite System) und gegebenenfalls durch den Abgleich mit digitalen Kartendaten erfolgen und/oder mit weiteren übertragenen Daten, zum Beispiel Geschwindigkeit und Fahrtrichtung des Senders, erfolgen.

Der Erfindung liegt die weitere Aufgabe zugrunde, ein Kommunikationssystem zu schaffen, mit dem das erfindungsgemäße Verfahren zur Beschleunigung von Überholvorgängen zwischen schweren Nutzfahrzeugen durchführbar ist.

Die Lösung dieser Aufgabe wird mittels eines Kommunikationssystems mit den Merkmalen des Patentanspruchs 6 erhalten. Besonders vorteilhafte Weiterbildungen des Kommunikationssystems sind in den Unteransprüchen 7 bis 9 offenbart.

Gemäß Patentanspruch 6 wird ein Kommunikationssystem für Nutzfahrzeuge zur Verkürzung des für einen Überholvorgang benötigten Überholzeitraums zwischen einem vorausfahrenden ersten Nutzfahrzeug und einem nachfolgenden zweiten Nutzfahrzeug, vorgeschlagen, wobei in dem ersten, zu überholenden Nutzfahrzeug anzeigbar ist, dass mit dem nachfolgenden, zweiten Nutzfahrzeug ein Überholvorgang durchgeführt wird, und wobei in jedem Nutzfahrzeug eine Sende-Empfangseinrichtung installiert ist, mittels denen im Zusammenhang mit dem beabsichtigten und/oder durchgeführten Überholvorgang Überholvorgangsdaten übermittelbar sind. Erfindungsgemäß besitzt das Kommunikationssystem einen Prozessor, der die Überholvorgangsdaten unter Berücksichtigung von während eines Überholvorganges ermittelten fahrdynamischen Kenngrößen auswertet. Für einen Überholvorgang, bei dem das erste Nutzfahrzeug überholt wurde, erfolgt dabei eine positive Bewertung, wenn das überholte erste Nutzfahrzeug seine Fahrgeschwindigkeit während des Überholvorganges reduziert hat.

Ein derartiger Prozessor kann jeweils in den Nutzfahrzeugen oder aber auch in einem zentralen Kommunikationsnetz, beispielsweise einem Funknetz, angeordnet sein. Mit einem solchen Kommunikationssystem können Überholvorgänge zeitlich deutlich verkürzt werden, wodurch nicht nur eine Verbesserung der Transporteffektivität sondern auch ein positiver Einfluss auf die Verkehrssituation beim Überholvorgang erreicht wird.

Bevorzugt besitzt jedes Nutzfahrzeug in seiner Sende-Empfangseinrichtung eine Empfangseinheit für GNSS-Signale, zum Beispiel eine GPS-Einheit, mit der eine geographische Positionsbestimmung des jeweiligen Nutzfahrzeuges möglich ist. Anhand von GNSS-Positionsdaten und/oder fahrdynamischen Kenngrößen kann vor und während eines Überholvorgangs eine Bewertung der Kooperation des Fahrers des überholten Nutzfahrzeugs erfolgen.

Jedem Prozessor des Kommunikationssystems kann ein Kenndatenspeicher zugeordnet sein in welchem Kenndaten zur Bewertung eines durchgeführten Überholvorgangs abgelegt sind. Derartige Kenndaten können Vergütungssätze zugeordnet zu Geschwindigkeitsreduzierungen des überholten Nutzfahrzeugs oder andere fahrdynamischen Daten betreffen.

Ferner betrifft die Erfindung ein Nutzfahrzeug mit einem erfindungsgemäßen Kommunikationssystem zur Durchführung eines erfindungsgemäßen Verfahrens. Die damit erzielbaren Vorteile entsprechen den zuvor bereits ausführlich genannten Vorteilen.

Die Erfindung wird nachfolgend anhand von in der Zeichnung dargestellten Ausführungsbeispielen näher erläutert.

Es zeigen:
- Figur 1: die Fahrsituation zweier schwerer Nutzfahrzeuge unmittelbar vor der Einleitung eines Überholvorganges,
- Figur 2: die in Nutzfahrzeugen angeordneten Sende-Empfangseinrichtungen, die über ein Funknetz in Verbindung stehen, und
- Figur 3: Sende-Empfangseinrichtungen zweier Nutzfahrzeuge, die direkt miteinander in Funkverbindung stehen.

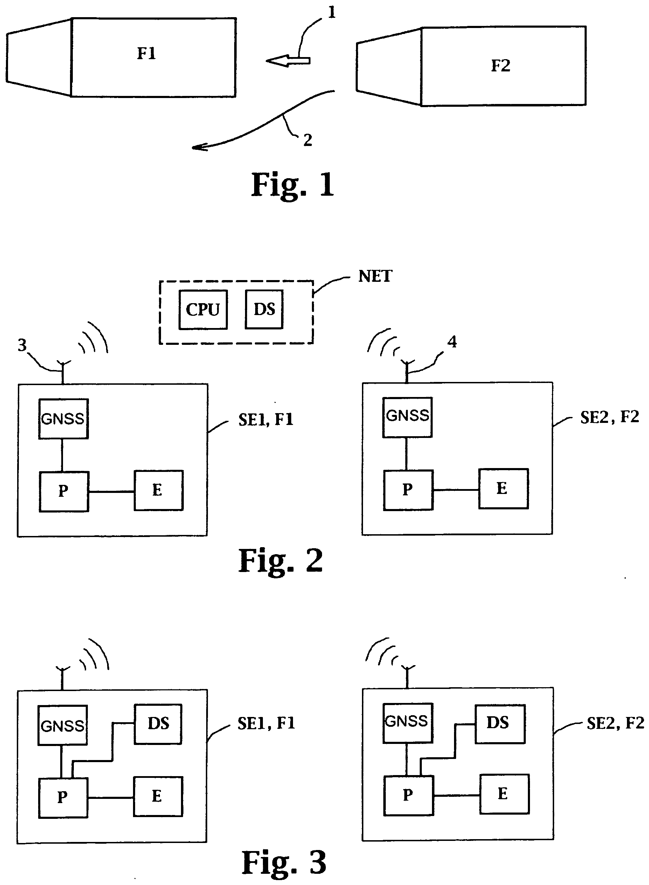

In Figur 1 ist die Fahrsituation zweier schwerer Nutzfahrzeuge F1 und F2 in einer vereinfachten Draufsicht dargestellt, wobei das nachfolgende Nutzfahrzeug F2 geringfügig seitlich gegenüber dem Nutzfahrzeug F1 versetzt ist. Die Fahrtrichtung beider Nutzfahrzeuge ist durch einen Richtungspfeil 1 dargestellt. Ein weiterer Pfeil 2 deutet die Bewegungsrichtung des nachfolgenden Nutzfahrzeugs F2 an, wenn dieses das vorausfahrende erste Nutzfahrzeug F1 überholt.

Bereits durch eine Betätigung des Blinkers kann ein bevorstehender Überholvorgang oder eine bestehende Überholabsicht mit großer Wahrscheinlichkeit festgestellt werden. Es besteht aber auch die Möglichkeit, dass eine Überholabsicht vom Fahrer des nachfolgenden Nutzfahrzeugs F2 durch eine gezielte Datenübermittlung an das vorausfahrende Nutzfahrzeug F1 oder an ein zentrales System über eine Funkverbindung mitgeteilt wird. Der Fahrer des vorausfahrenden Nutzfahrzeugs F1 kann daraufhin eine Kooperation bei dem beabsichtigten Überholvorgang dem Fahrer des nachfolgenden Nutzfahrzeugs F2 durch eine entsprechende Datenübermittlung bzw. Informationsübermittlung mitteilen. Die Datenübermittlung zwischen den beiden Nutzfahrzeugen F1 und F2, die Überholvorgangsdaten beinhaltet, kann auch einen Vergütungssatz beinhalten, der im Falle einer Kooperation beim Überholvorgang dem überholten Nutzfahrzeug bzw. dessen Fahrer gutgeschrieben wird. Um beim Überholvorgang eine vorhandene Kooperation feststellen zu können, können fahrdynamische Kenngrößen beider Nutzfahrzeuge F1, F2 durch das Kommunikationssystem übertragen werden, über das die beiden Nutzfahrzeuge F1, F2 in Datenverbindung stehen, um im Fahrzeug F1 und/oder F2 ausgewertet zu werden. Ergibt die Auswertung, dass keine Kooperation beim Überholvorgang stattfand, kann eine zuvor angebotene Vergütung bzw. ein vorgesehener pauschaler Vergütungssatz abgelehnt werden.

Anhand der fahrdynamischen Kenngrößen kann das Kommunikationssystem auch eine detailliertere Bewertung einer vorhandenen Kooperation durchführen, wobei insbesondere berücksichtigt werden kann, in welchem Maße das überholte Nutzfahrzeug F1 seine Fahrgeschwindigkeit beim Überholvorgang reduziert hat.

Als Vergütung für einen kooperativen Überholvorgang können Geldbeträge vorgesehen sein, jedoch besteht auch die Möglichkeit, Bonuspunkte oder andere Vergütungsformen vorzusehen. Insbesondere kann vorgesehen sein, dass ein Vergütungssystem mit einem Mautsystem gekoppelt ist, so dass sich kooperatives Verhalten zum Beispiel mautmindernd auswirkt.

Figur 2 zeigt ein Ausführungsbeispiel eines Kommunikationssystems in Form eines Blockschaltbildes, über das die beiden Nutzfahrzeuge von Figur 1 eine Datenübermittlung durchführen können, um durch Kooperation ein möglichst zügiges Überholen zu ermöglichen. In Figur 2 ist eine Sende-Empfangseinrichtung SE1 vorgesehen, die im Nutzfahrzeug F1 von Figur 1 angeordnet ist. Weiterhin ist eine Sende-Empfangseinrichtung SE2 vorgesehen, die im Nutzfahrzeug F2 von Figur 1 angeordnet ist. Beide Sende-Empfangseinrichtungen SE1, SE2 kommunizieren über ein Funknetz NET welches zumindest einen zentralen Prozessor CPU und einen Datenspeicher DS umfasst.

Beide Sende-Empfangseinrichtungen SE1 , SE2 beinhalten ein Positioniersystem GNSS, einen Prozessor P und eine Eingabeeinheit E. Über Sende-Empfangsantennen 3, 4 werden von den Sende-Empfangseinrichtungen SE1, SE2 Überholvorgangsdaten an den zentralen Prozessor CPU des Funknetzes NET übertragen, um diese im Zusammenhang mit einem beabsichtigten und/oder durchgeführten Überholvorgang auszuwerten. Ein beabsichtigter Überholvorgang kann im nachfolgenden Nutzfahrzeug F2 durch Betätigung einer Überholtaste oder mittels Spracheingabe über die Eingabeeinheit E angekündigt werden. Der beabsichtigte Überholvorgang wird dann über das Funknetz NET an das vorausfahrende erste Nutzfahrzeug F1 per Funk übermittelt, worauf dessen Fahrer durch eine entsprechende Eingabe an seiner Eingabeeinheit E eine Kooperation beim bevorstehenden Überholvorgang anzeigen oder ablehnen kann. Über das Funknetz NET wird die Reaktion des Fahrers des vorausfahrenden Nutzfahrzeugs F1 an den Fahrer des nachfolgenden Nutzfahrzeugs F2 übermittelt, so dass dieser erkennen kann, ob eine Kooperation bei dem beabsichtigten Überholvorgang vom Fahrer des vorausfahrenden Nutzfahrzeugs F1 erwartet werden kann. Wird nun der Überholvorgang durchgeführt, kann das Kommunikationssystem, über das zwischen den Nutzfahrzeugen F1, F2 eine Datenübermittlung erfolgt, überwachen, ob eine angekündigte Kooperation vom Fahrer des zu überholenden Nutzfahrzeugs F1 während des Überholvorganges stattfindet. Hierzu kann das Kommunikationssystem mittels des zentralen Prozessors CPU fahrdynamische Kenndaten beider Nutzfahrzeuge F1, F2, die an dem Überholvorgang beteiligt sind, auswerten. Insbesondere können dabei GNSS-Informationen ausgewertet werden, anhand derer eine einfach durchführbare Bewertung des Kooperationsverhaltens möglich ist.

In Figur 3 ist ein Kommunikationssystem dargestellt, bei dem die beiden an einem Überholvorgang beteiligten Nutzfahrzeuge F1, F2 über eine Funkverbindung direkt miteinander überholvorgangsdaten austauschen und eine Bewertung einer Kooperation beim Überholvorgang in den Sende-Empfangseinrichtungen SE1, SE2 der beiden Nutzfahrzeuge F1, F2 durchgeführt wird. In beiden Sende-Empfangseinrichtungen SE1, SE2 ist hier ein zusätzlicher Datenspeicher DS vorgesehen, in welchem relevante Überholvorgangsdaten abgespeichert werden können. Außerdem können in dem Datenspeicher DS Kenndaten abgespeichert sein, die zur Bewertung einer Kooperation bei einem Überholvorgang erforderlich oder zweckmäßig sind. Derartige Kenndaten können Vergütungssätze in Abhängigkeit von Geschwindigkeitsreduzierungen beim überholten Nutzfahrzeug und auch Kenndaten des jeweiligen Nutzfahrzeugs umfassen, die für eine Bewertung eines durchgeführten Überholvorganges herangezogen werden können.

Die Einleitung und Durchführung eines Überholvorganges erfolgt auch bei einem Kommunikationssystem, wie es in Figur 3 dargestellt ist, in der Weise, wie anhand von Figur 2 beschrieben. Allerdings erfolgt die Bewertung des Überholvorganges und insbesondere die Bewertung einer Kooperation des Fahrers eines überholten Nutzfahrzeugs in den Sende-Empfangseinrichtungen SE1 und/oder SE2 der beiden am Überholvorgang beteiligten Nutzfahrzeuge F1, F2.

Im Zuge der Kommunikation im Zusammenhang mit Überholvorgängen können temporäre, fahrzeuggebundene Pseudonyme verwendet und zwischen den Kommunikationspartnern ausgetauscht werden Stellt ein Algorithmus auf einem Steuergerät im Fahrzeug des Überholers oder des Überholten oder in einem zentralen System fest, dass sich bestimmte Pseudonym-Paare innerhalb einer definierten Zeitspanne und/oder einer definierten lokalen Umgebung immer wieder gegenseitig überholen, so kann damit ein Missbrauchsfall erkannt werden. Wird ein Missbrauch detektiert, können zum Beispiel folgende Maßnahmen eingeleitet werden:
- Abzug bereits erhaltener Entlohnung
- Herabstufung der "Reliability" / Zuverlässigkeit eines Fahrers
- Ausschluss von dem Bonussystem.

## Patentansprüche

1. Verfahren zur Verkürzung des für einen Überholvorgang benötigten Überholzeitraums zwischen einem vorausfahrenden ersten Nutzfahrzeug (F1) und einem nachfolgenden zweiten Nutzfahrzeug (F2), wobei in dem ersten, zu überholenden Nutzfahrzeug (F1) angezeigt wird, dass mit dem nachfolgenden, zweiten Nutzfahrzeug (F2) ein Überholvorgang durchgeführt wird, und wobei in jedem Nutzfahrzeug (F1, F2) eine Sende-Empfangseinrichtung (SE1, SE2) installiert ist, mittels denen im Zusammenhang mit dem beabsichtigten und/oder durchgeführten Überholvorgang Überholvorgangsdaten übermittelt werden,
**dadurch gekennzeichnet,**
**dass** anhand der Überholvorgangsdaten nach Beendigung des Überholvorganges eine Bewertung des Überholvorganges erfolgt, wobei für einen Überholvorgang, bei dem das erste Nutzfahrzeug (F1) überholt wurde, eine positive Bewertung erfolgt, wenn das überholte erste Nutzfahrzeug (F1) seine Fahrgeschwindigkeit während des Überholvorgangges reduziert hat.

2. Verfahren nach Anspruch 1, **dadurch gekennzeichnet, dass** vor der Durchführung eines beabsichtigten Überholvorganges im nachfolgenden zweiten Nutzfahrzeug (F2) eine Übermittlung von Überholvorgangsdaten selbsttätig oder durch Betätigung einer Eingabeeinheit (E) ausgelöst wird.

3. Verfahren nach Anspruch 1 oder 2, **dadurch gekennzeichnet, dass** bei der Bewertung eines durchgeführten Überholvorganges eine Kosten-Nutzenermittlung für das erste und/oder zweite Nutzfahrzeug (F1, F2) erfolgt.

4. Verfahren nach einem der vorhergehenden Ansprüche, **dadurch gekennzeichnet, dass** dem überholten Nutzfahrzeug (F1) eine vorgegebene Vergütungspauschale oder eine individuell berechnete Vergütung für einen positiv bewerteten Überholvorgang in einem Datenspeicher (DS) gutgeschrieben wird.

5. Verfahren nach einem der vorhergehenden Ansprüche, **dadurch gekennzeichnet, dass** ein Algorithmus auf einem Steuergerät im Fahrzeug feststellt, ob eine empfangene Nachricht auf das eigene Fahrzeug bezogen ist.

6. Kommunikationssystem für Nutzfahrzeuge (F1, F2) zur Verkürzung des für einen Überholvorgang benötigten Überholzeitraums zwischen einem vorausfahrenden ersten Nutzfahrzeug (F1) und einem nachfolgenden zweiten Nutzfahrzeug (F2), wobei in dem ersten, zu überholenden Nutzfahrzeug (F1) anzeigbar ist, dass mit dem nachfolgenden, zweiten Nutzfahrzeug (F2) ein Überholvorgang durchgeführt wird, und wobei in jedem Nutzfahrzeug (F1, F2) eine Sende-Empfangseinrichtung (SE1, SE2) installiert ist, mittels denen im Zusammenhang mit dem beabsichtigten und/oder durchgeführten Überholvorgang Überholvorgangsdaten übermittelbar sind,
**dadurch gekennzeichnet,**
**dass** mittels eines Prozessors (CPU, P) die Überholvorgangsdaten unter Berücksichtigung von während eines Überholvorganges ermittelten fahrdynamischen Kenngrößen auswertbar sind, wobei für einen Überholvorgang, bei dem das erste Nutzfahrzeug (F1) überholt wurde, eine positive Bewertung erfolgt, wenn das überholte erste Nutzfahrzeug (F1) seine Fahrgeschwindigkeit während des Überholvorganges reduziert hat.

7. Kommunikationssystem nach Anspruch 6, **dadurch gekennzeichnet, dass** der Prozessor (P, CPU) die fahrdynamischen Kenngrößen unter Berücksichtigung von GNSS-Daten eines Positionierungssystems (GNSS) auswertet.

8. Kommunikationssystem nach einem der Ansprüche 6 oder 7, **dadurch gekennzeichnet, dass** in einem Datenspeicher (DS) Kenndaten zur Bewertung eines Überholvorganges und zur Ermittlung einer angemessenen Vergütung abgespeichert sind.

9. Kommunikationssystem nach Anspruch 8, **dadurch gekennzeichnet, dass** der Datenspeicher (DS) in einem zentralen Funknetz (NET) und/oder in jeder Sende-Empfangseinrichtung (SE1, SE2) eines Nutzfahrzeugs (F1, F2) angeordnet ist.

10. Nutzfahrzeug mit einem Kommunikationssystem nach einem der Ansprüche 6 bis 9 zur Durchführung eines Verfahrens nach einem der Ansprüche 1 bis 5.

## Claims

1. Method for shortening the overtaking period needed for an overtaking manoeuvre between a first commercial vehicle (F1) travelling ahead and a following second commercial vehicle (F2), wherein a display is produced in the first commercial vehicle (F1), which is to be overtaken, indicating that an overtaking manoeuvre is being performed with the following, second commercial vehicle (F2), and wherein each commercial vehicle (F1, F2) has a transceiver device (SE1, SE2) installed in it that is used to transmit overtaking manoeuvre data in connection with the intended and/or performed overtaking manoeuvre, **characterized**
**in that** the overtaking manoeuvre data are used, following termination of the overtaking manoeuvre, to rate the overtaking manoeuvre, wherein an overtaking manoeuvre in which the first commercial vehicle (F1) has been overtaken is provided with a positive rating if the overtaken first commercial vehicle (F1) reduced its speed of travel during the overtaking manoeuvre.

2. Method according to Claim 1, **characterized in that** the performance of an intended overtaking manoeuvre in the following, second commercial vehicle (F2) is preceded by a transmission of overtaking manoeuvre data being initiated automatically or by virtue of operation of an input unit (E).

3. Method according to Claim 1 or 2, **characterized in that** the rating of a performed overtaking manoeuvre involves a cost/benefit being ascertained for the first and/or second commercial vehicle (F1, F2).

4. Method according to one of the preceding claims, **characterized in that** the overtaken commercial vehicle (F1) is credited with a prescribed flat-rate reimbursement or an individually computed reimbursement for a positively rated overtaking manoeuvre in a data memory (DS).

5. Method according to one of the preceding claims, **characterized in that** an algorithm on a controller in the vehicle establishes whether a received message relates to that actual vehicle.

6. Communication system for commercial vehicles (F1, F2) for shortening the overtaking period needed for an overtaking manoeuvre between a first commercial vehicle (F1) travelling ahead and a following second commercial vehicle (F2), wherein a display can be produced in the first commercial vehicle (F1), which is to be overtaken, indicating that an overtaking manoeuvre is being performed with the following, second commercial vehicle (F2), and wherein each commercial vehicle (F1, F2) has a transceiver device (SE1, SE2) installed in it that can be used to transmit overtaking manoeuvre data in connection with the intended and/or performed overtaking manoeuvre,
**characterized**
**in that** a processor (CPU, P) can be used to evaluate the overtaking manoeuvre data by taking into consideration driving-dynamics parameters ascertained during an overtaking manoeuvre, wherein an overtaking manoeuvre in which the first commercial vehicle (F1) has been overtaken is provided with a positive rating if the overtaken first commercial vehicle (F1) reduced its speed of travel during the overtaking manoeuvre.

7. Communication system according to Claim 6, **characterized in that** the processor (P, CPU) evaluates the driving-dynamics parameters by taking into consideration GNSS data from a positioning system (GNSS).

8. Communication system according to either of Claims 6 and 7, **characterized in that** a data memory (DS) stores characteristic data for rating an overtaking manoeuvre and for ascertaining an appropriate reimbursement.

9. Communication system according to Claim 8, **characterized in that** the data memory (DS) is arranged in a central radio network (NET) and/or in each transceiver device (SE1, SE2) of a commercial vehicle (F1, F2).

10. Commercial vehicle having a communication system according to one of Claims 6 to 9 for performing a method according to one of Claims 1 to 5.

## Revendications

1. Procédé de raccourcissement de la période de dépassement nécessaire pour une opération de dépassement entre un premier véhicule utilitaire (F1) qui précède et un deuxième véhicule utilitaire (F2) qui suit, le fait qu'une opération de dépassement est réalisée avec le deuxième véhicule utilitaire (F2) qui suit étant affiché dans le premier véhicule utilitaire (F1) à dépasser, et un dispositif d'émission-réception (SE1, SE2) étant installé dans chaque véhicule utilitaire (F1, F2), au moyen duquel sont communiquées des données d'opération de dépassement en rapport avec l'opération de dépassement envisagée et/ou réalisée,
**caractérisé en ce**
**qu'**une évaluation de l'opération de dépassement est effectuée au moyen des données d'opération de dépassement après avoir terminé l'opération de dépassement, une évaluation positive d'une opération de dépassement lors de laquelle le premier véhicule utilitaire (F1) a été dépassé ayant lieu lorsque le premier véhicule utilitaire (F1) dépassé a réduit sa vitesse de déplacement pendant l'opération de dépassement.

2. Procédé selon la revendication 1, **caractérisé en ce qu'**avant de réaliser une opération de dépassement envisagée, une communication des données d'opération de dépassement dans le deuxième véhicule utilitaire (F2) qui suit est déclenchée automatiquement ou en actionnant une unité de saisie (E).

3. Procédé selon la revendication 1 ou 2, **caractérisé en ce que** lors de l'évaluation d'une opération de dépassement réalisée, une détermination du rapport coût/utilité est effectuée pour le premier et/ou le deuxième véhicule utilitaire (F1, F2).

4. Procédé selon l'une des revendications précédentes, **caractérisé en ce qu'**une indemnité forfaitaire prédéfinie ou une indemnité calculée individuellement est créditée dans une mémoire de données (DS) au véhicule utilitaire (F1) qui dépasse pour une opération de dépassement à l'évaluation positive.

5. Procédé selon l'une des revendications précédentes, **caractérisé en ce qu'**un algorithme sur un contrôleur dans le véhicule détermine si un message reçu se rapporte au véhicule propre.

6. Système de communication pour véhicules utilitaires (F1, F2) destiné à raccourcir une période de dépassement nécessaire pour une opération de dépassement entre un premier véhicule utilitaire (F1) qui précède et un deuxième véhicule utilitaire (F2) qui suit, le fait qu'une opération de dépassement est réalisée avec le deuxième véhicule utilitaire (F2) qui suit étant affiché dans le premier véhicule utilitaire (F1) à dépasser, et un dispositif d'émission-réception (SE1, SE2) étant installé dans chaque véhicule utilitaire (F1, F2), au moyen duquel peuvent être communiquées des données d'opération de dépassement en rapport avec l'opération de dépassement envisagée et/ou réalisée,
**caractérisé en ce**
**que** les données d'opération de dépassement peuvent être interprétées au moyen d'un processeur (CPU, P) en tenant compte de grandeurs caractéristiques de dynamique de conduite déterminées pendant une opération de dépassement, une évaluation positive d'une opération de dépassement lors de laquelle le premier véhicule utilitaire (F1) a été dépassé ayant lieu lorsque le premier véhicule utilitaire (F1) dépassé a réduit sa vitesse de déplacement pendant l'opération de dépassement.

7. Système de communication selon la revendication 6, **caractérisé en ce que** le processeur (CPU, P) interprète les grandeurs caractéristiques de dynamique de conduite en tenant compte de données GNSS d'un système de positionnement (GNSS).

8. Système de communication selon l'une des revendications 6 ou 7, **caractérisé en ce que** des données caractéristiques servant à évaluer une opération de dépassement et servant à déterminer un crédit raisonnable sont enregistrées dans une mémoire de données (DS).

9. Système de communication selon la revendication 8, **caractérisé en ce que** la mémoire de données (DS) est disposée dans un réseau de radiocommunication central (NET) et/ou dans chaque dispositif d'émission-réception (SE1, SE2) d'un véhicule utilitaire (F1, F2).

10. Véhicule utilitaire équipé d'un système de communication selon l'une des revendications 6 à 9 pour mettre en oeuvre un procédé selon l'une des revendications 1 à 5.
